# EUROPÄISCHE PATENTSCHRIFT

(11) **EP 3 113 339 B1**
(45) Veröffentlichungstag und Bekanntmachung des Hinweises auf die Patenterteilung: **08.07.2020**
(21) Anmeldenummer: 16169117.5
(22) Anmeldetag: 11.05.2016
(51) Int. Cl.: H02K 15/03, H02K 1/27, H02K 1/02, B22F 3/02, B22F 3/16, H02K 1/04, B22F 5/00

(54) **HERSTELLUNGSVERFAHREN FÜR EINEN ROTOR UND ENTSPRECHENDER ROTOR**
MANUFACTURING METHOD FOR A ROTOR AND CORRESPONDING ROTOR
PROCEDE DE FABRICATION D'UN ROTOR ET ROTOR CORRESPONDANT

(30) Priorität: 26.06.2015 DE 102015211911
(43) Veröffentlichungstag der Anmeldung: 04.01.2017
(73) Patentinhaber: Robert Bosch GmbH, 70442 Stuttgart (DE)
(72) Erfinder: Vogt, Andreas, 71272 Renningen (DE)

(56) Entgegenhaltungen:
- WO-A1-89/11752
- WO-A1-2010/066251
- DE-A1-102008 039 912
- JP-A- H05 260 706
- US-A- 5 221 503
- US-A- 5 495 658
- US-A1- 2003 127 157
- US-A1- 2005 001 499

## Beschreibung

Die vorliegende Erfindung betrifft ein Herstellungsverfahren für einen Rotor für einen Elektromotor.

### Stand der Technik

Elektromotoren mit Drehzahlen im Bereich von mehreren 10.000 bis sogar mehreren 100.000 Umdrehungen pro Minute stellen den Entwickler vor die Herausforderung, einen Rotor herzustellen, welcher selbst bei den hohen Fliehkräften, welche bei diesen Drehzahlen auftreten, immer noch stabil ist. Für Rotoren mit eingebauten Magneten muss sichergestellt werden, dass die Magnete sicher an der Rotorwelle befestigt sind und sich nicht durch die Fliehkräfte lockern.

Durch die US 5 495 658 A ist ein Herstellungsverfahren für einen Rotor bekannt, bei dem ein magnetisierbares Pulver in eine hohle Rotorhülse eingeführt und in die Rotorhülse eingepresst wird. Das Pulver wird mit einem Harz gemischt und die Rotorhülse wird vor dem Einpressen des mit dem Harz gemischten Pulvers erhitzt um eine Aushärtung des Harzes zu erreichen. Das eingepresste Pulver wird magnetisiert.

Durch die US 5 221 503 A ist ein weiteres Herstellungsverfahren für einen Rotor bekannt. Dabei wird ein magnetisierbares Pulver zur Herstellung eines Magnetkerns verwendet, dessen Partikel mit elektrisch leitfähigem Material beschichtet sind. Das magnetisierbare Pulver wird zu einem festen Körper verschmolzen und dieser wird in nicht näher beschriebener Weise mit einer hohlen Rotorhülse verbunden.

Falls die Innenwände der Rotorhülse oder die Außenseiten des Magnetkerns nicht vollständig eben sind, kann eine genaue Passung nicht gewährleistet werden. Insbesondere können kleine Hohlräume zwischen Magnetkern und Rotorhülse entstehen, wodurch der Sitz des Magnetkerns in der Rotorhülse verringert wird.

Des Weiteren kann es auftreten, dass der Sitz des Motors bei sehr hohen Drehzahlen nicht fest genug ist. Insbesondere dehnen sich die Wände der hohlen Rotorhülse aufgrund der Zentripetalkraft aus, wodurch sich der Sitz des eingepressten Magnets lockern kann. Auch bei hohen Temperaturen, wie sie etwa aufgrund von Wirbelströmen im Inneren des Magnetkerns erzeugt werden, kann eine derartige radiale Ausdehnung der Rotorhülse auftreten.

### Offenbarung der Erfindung

### Vorteile der Erfindung

Dadurch, dass das magnetisierbare Pulver direkt in der Rotorhülse eingepresst wird, kann ein fester Sitz des durch das gepresste Pulver entstehenden Magnetkerns in der Rotorhülse garantiert werden. Durch den großen Anpressdruck des Magnetkerns an die Innenseiten der Rotorhülse bleibt der Magnetkern selbst bei hohen Umdrehungsgeschwindigkeiten sicher in der Rotorhülse verankert. Dies ist insbesondere dann der Fall, wenn sich die Rotorhülse aufgrund von Fliehkraft oder hohen Temperaturen radial ausdehnt. Im Gegensatz zu einem Verfahren, bei dem ein fester Magnetkern in eine Rotorhülse eingepresst wird, kann bei dem erfindungsgemäßen Herstellungsverfahren zusätzlich garantiert werden, dass durch Pressen des Pulvers ein Magnetkern entsteht, welcher gleichmäßig an die Innenwand der Rotorhülse angepresst wird. Das heißt, selbst wenn die Innenwand der Rotorhülse nicht komplett eben ist, können keine Hohlräume entstehen. Damit ist es nicht erforderlich, dass die Innenwände der Rotorhülse eine sehr hohe Ebenheit aufweisen, da durch Anpressen des Pulvers trotzdem ein sicherer Sitz gewährleistet ist. Die Rotorhülse kann dadurch kostengünstiger produziert werden.

Erfindungsgemäß wird die Rotorhülse vor dem Einpressen erhitzt. Ein Erwärmen der Rotorhülse führt zu einer axialen Erweiterung der Rotorhülse. Nach dem Einpressen des Pulvers kühlt die Rotorhülse wieder ab, was zu einer Verringerung des Innenradius der Rotorhülse führt. Dadurch wird der Sitz des Magnetkerns zusätzlich verbessert, da der Anpressdruck des Magnetkerns auf die Innenwände der Rotorhülse erhöht wird.

Aufgrund der Stabilität des Rotors wird garantiert, dass sich der Sitz des Magnetkerns auch bei hohen Umdrehungsgeschwindigkeiten nicht lockert. Des Weiteren entfällt ein zusätzlicher Herstellungsschritt, da das Pulver direkt in die Rotorhülse eingepresst und zu einem Magnetkern verpresst wird und nicht in einem ersten Schritt ein Magnetkern hergestellt werden muss, welcher in einem zweiten Schritt in die Rotorhülse eingepresst werden muss.

Gemäß einer weiteren Ausführungsform des Herstellungsverfahrens wird das Einpressen des Pulvers durch Einführen eines ersten Stempels in eine erste Öffnung der Rotorhülse und durch Einführen eines zweiten Stempels in eine zweite Öffnung der Rotorhülse durchgeführt. Durch beidseitiges Pressen kann das Pulver gleichmäßig in die Rotorhülse eingepresst werden.

Gemäß einer weiteren Ausführungsform des Herstellungsverfahrens enthält das Pulver weichmagnetische Kompositwerkstoffe. Diese Materialien weisen gute magnetische Eigenschaften auf und sind leicht verarbeitbar.

Gemäß einer weiteren Ausführungsform des Herstellungsverfahrens enthält das elektrisch isolierende Material organische Verbindungen.

Gemäß einer weiteren Ausführungsform des Herstellungsverfahrens wird das Pulver vor dem Magnetisieren gesintert. Durch einen Sinterprozess wird sichergestellt, dass das Pulver gleichmäßig verteilt ist und eine homogene Struktur aufweist.

Gemäß einer weiteren Ausführungsform des Herstellungsverfahrens erfolgt das Pressen hydraulisch oder mechanisch.

Gemäß einer weiteren Ausführungsform des Herstellungsverfahrens wird die Rotorhülse während des Einpressens von außen durch eine an die Form der Rotorhülse angepasste Verschalung gestützt. Die Verschalung verhindert, dass die Rotorhülse sich verzieht, bricht oder anderweitig unbrauchbar wird. Zusätzlich kann aufgrund der Stützung durch die Verschaltung der Druck, mit welchem das Pulver eingepresst wird, zusätzlich erhöht werden. Dadurch wird ein stärkerer Sitz des Magnetkerns in der Rotorhülse gewährleistet.

### Kurze Beschreibung der Zeichnungen

Es zeigen:
- FIG. 1: ein Flussdiagramm zur Erläuterung eines Herstellungsverfahrens für einen Rotor;
- FIG. 2, 3: schematische Querschnittsansichten zur Erläuterung des Herstellungsverfahrens für einen Rotor;
- FIG. 4: eine schematische Querschnittsansicht eines magnetisierbaren Pulvers;
- FIG. 5: eine schematische Querschnittsansicht zur Erläuterung des Herstellungsverfahrens für einen Rotor;
- FIG. 6: einen Rotor; und
- FIG. 7: ein Flussdiagramm zur Erläuterung eines Herstellungsverfahrens für einen Rotor gemäß einer Ausführungsform der Erfindung.

In allen Figuren sind gleiche bzw. funktionsgleiche Elemente und Vorrichtungen - sofern nichts anderes angegeben ist - mit denselben Bezugszeichen versehen. Die Nummerierung von Verfahrensschritten dient der Übersichtlichkeit und soll insbesondere nicht, sofern nichts anderes angegeben ist, eine bestimmte zeitliche Reihenfolge implizieren. Insbesondere können auch mehrere Verfahrensschritte gleichzeitig durchgeführt werden.

### Beschreibung der Ausführungsbeispiele

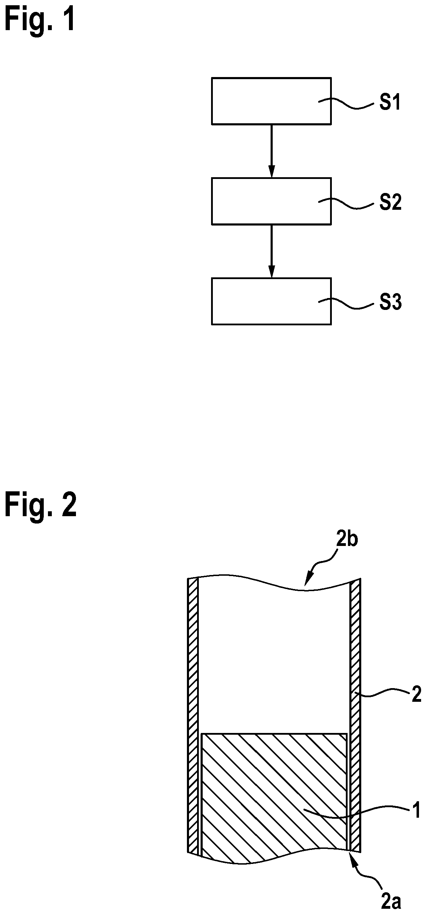

Figur 1 zeigt ein Flussdiagramm zur Erläuterung eines Herstellungsverfahrens für einen Rotor für einen Elektromotor.

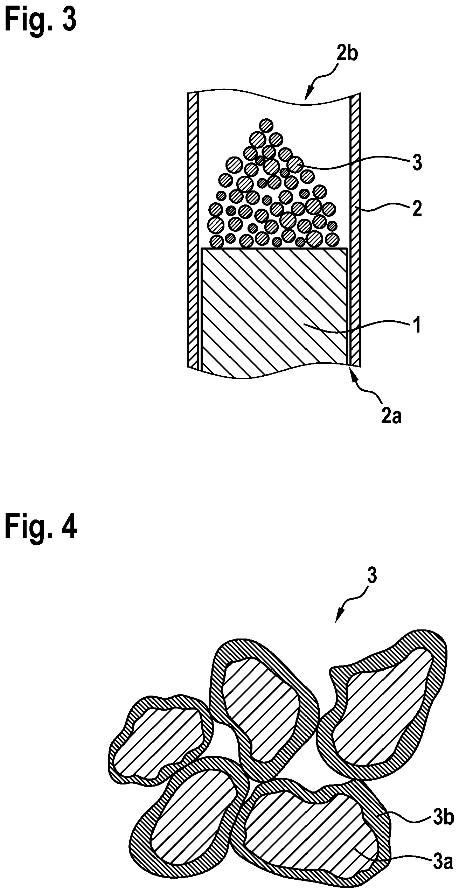

In einem ersten Schritt S1 wird ein magnetisierbares Pulver 3 in eine hohle Rotorhülse 2 eingeführt. In Fig. 2 ist eine Schnittansicht der Rotorhülse 2 gezeigt, wobei ein erster Stempel 1 in eine erste Öffnung 2a der Rotorhülse 2 eingeführt ist. Figur 3 zeigt eine Querschnittsansicht der Rotorhülse 2 mit dem ersten Stempel 1, wobei das magnetisierbare Pulver 3 durch eine zweite Öffnung 2b der Rotorhülse 2 eingeführt wurde. Die Rotorhülse 2 besteht hierbei aus einem nicht magnetisierbaren Material. Das Pulver 3 enthält ein magnetisierbares Material, beispielsweise Eisen, Kobalt, Nickel, magnetisierbare Legierungen oder Seltenerdmagnete.

Erfindungsgemäß besteht das Pulver 3 wie in Figur 4 gezeigt aus Partikeln 3a aus einem magnetisierbaren Material, welche mit einem elektrisch isolierenden Material 3b beschichtet sind. Der mittlere Durchmesser der Partikel 3a kann im Bereich von etwa 0,01 bis 1 Millimeter liegen. Vorzugsweise ist der mittlere Durchmesser der Partikel 3a etwa 0,1 Millimeter. Das Pulver 3 kann insbesondere weichmagnetische Kompositwerkstoffe (Soft Magnetic Composites, SMC) enthalten. Das elektrisch isolierende Material 3b kann vorzugsweise organische Verbindungen enthalten. Beispielsweise kann das von der Firma Höganäs hergestellte Somaloy®-Magnetpulver verwendet werden. Aufgrund des elektrisch isolierenden Materials 3b sind die Partikel 3a elektrisch voneinander getrennt und Wirbelströme können nur innerhalb der Partikel 3a auftreten, jedoch nicht auf größeren Skalen.

Zusätzlich kann noch ein Schmiermittel oder ein Bondemittel zu dem Pulver 3 hinzugegeben werden.

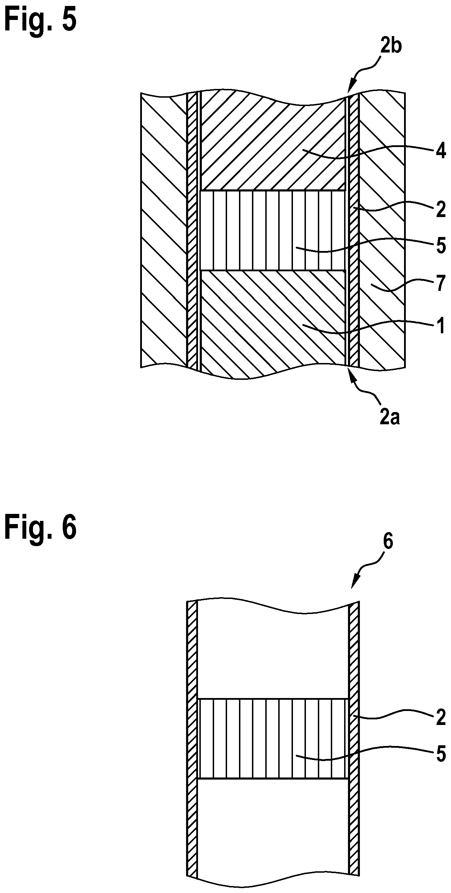

In einem zweiten Schritt S2 wird das Pulver 3 in die Rotorhülse 2 eingepresst. Wie in Figur 5 gezeigt, wird dazu die Rotorhülse 2 vorzugsweise von außen durch eine an den Rotor 2 angepasste Verschalung 7, beispielsweise eine Manschette, gestützt. Die Verschalung 7 umgibt also die Rotorhülse 2 formschlüssig und stützt diese von außen. In die zweite Öffnung 2b der Rotorhülse 2 wird ein zweiter Stempel 4 eingeführt. Durch hydraulisches oder mechanisches Pressen wird ein Druck von beispielsweise 200 MPa bis 1000 MPa auf das Pulver 3 beaufschlagt. Durch Pressen des magnetisierbaren Pulvers 3 entsteht ein Magnetkern 5, welcher an die Innenwände der Rotorhülse 2 angepresst wird.

In einem dritten Schritt S3 wird der Magnetkern 5 magnetisiert. Dazu werden die Verschalung 7, der erste Stempel 1 und der zweite Stempel 4 entfernt und durch Anlegen eines starken Magnetfelds und durch einen Temperschritt die Magnetisierung durchgeführt. Die Magnetisierung kann beispielsweise mit Hilfe eines Magnetisiergeräts mit Kondensatoren durchgeführt werden. Die Stärke der Magnetisierung kann hierbei auf das gewünschte Anwendungsgebiet des Rotors eingestellt werden. Vorzugsweise wird das Pulver 3 vor dem Magnetisieren gesintert.

Figur 6 zeigt einen gemäß dem oben beschriebenen Herstellungsverfahren hergestellten Rotor 6 mit einer hohlen Rotorhülse 2 und einem in die hohle Rotorhülse 2 eingepressten Magnetkern 5, wobei der Magnetkern 5 aus gepresstem magnetisierbaren Pulver 3, insbesondere Pulver mit magnetisierbaren Partikeln, welche mit einem elektrisch isolierenden Material beschichtet sind, besteht.

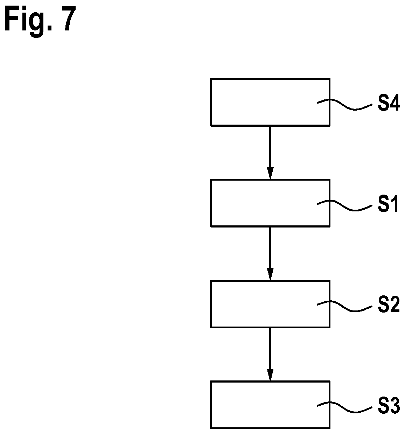

Figur 7 zeigt ein Herstellungsverfahren für einen Rotor 6 für einen Elektromotor gemäß einer Ausführungsform der Erfindung. Vor dem Einführen des magnetisierbaren Pulvers wird hierbei die Rotorhülse erhitzt (S4). Dazu kann die Hülse in ein Induktionsheizungsspulensystem eingesetzt werden, welches die Hülse auf die gewünschte Temperatur erhitzt. Beispielsweise kann die Rotorhülse 2 auf eine Temperatur zwischen 400°C und 600°C erhitzt werden. Die Rotorhülse 2 kann hierbei auf höhere Temperaturen erhitzt werden, als dies beim Einpressen eines bereits fertig gepressten Magnetkerns geschehen kann, da im letzteren Fall verhindert werden muss, dass sich die Oberfläche des Magnetkerns verzieht oder beschädigt wird, wodurch die Temperatur, auf welche die Hülse erhitzt wird, unterhalb der Anlasstemperatur des Materials des Magnetkerns gehalten werden muss.

Durch Erhitzen der Rotorhülse dehnt diese sich in radialer Richtung aus. Dadurch kann ein Anpressdruck des Pulvers auf die Innenwände der Rotorhülse beim Einpressen erhöht werden. Die folgenden Schritte des Einführens S1 des magnetisierbaren Pulvers 3 in die hohle Rotorhülse 2, des Einpressens S2 des Pulvers in die Rotorhülse 2 und das Magnetisieren S3 des eingepressten Pulvers 3 werden hierbei analog wie oben beschrieben durchgeführt. Nach dem Magnetisieren des eingepressten Pulvers 3 wird die Rotorhülse 2 wieder abgekühlt. Hierbei muss beachtet werden, dass die Abkühlung sorgfältig gesteuert wird, um eine Schädigung des Magnetkerns 5 zu verhindern.

Beim Abkühlen der Rotorhülse 2 schrumpft der Radius der Rotorhülse 2 wieder, wodurch der Anpressdruck des Magnetkerns 5 erhöht wird.

## Patentansprüche

1. Herstellungsverfahren für einen Rotor (6) für einen Elektromotor mit den folgenden Schritten:
- Einführen (S1) eines magnetisierbaren Pulvers (3) in eine hohle Rotorhülse (2), wobei das Pulver (3) magnetisierbare Partikel (3a) enthält, welche mit einem elektrisch isolierenden Material (b) beschichtet sind;
- Einpressen (S2) des Pulvers (3) in die Rotorhülse (2), wobei durch Pressen des magnetisierbaren Pulvers (3) ein Magnetkern (5) entsteht, welcher an die Innenwände der Rotorhülse (2) angepresst wird;
- und Magnetisieren (S3) des eingepressten Pulvers (3);
- wobei die Rotorhülse (2) vor dem Einpressen erhitzt wird und wobei beim Abkühlen der Rotorhülse (2) der Radius der Rotorhülse (2) schrumpft, wodurch der Anpressdruck des Magnetkerns (5) erhöht wird.

2. Herstellungsverfahren nach Anspruch 1, wobei das Einpressen des Pulvers durch Einführen eines ersten Stempels (1) in eine erste Öffnung der Rotorhülse und durch Einführen eines zweiten Stempels (4) in eine zweite Öffnung der Rotorhülse (2) durchgeführt wird.

3. Herstellungsverfahren nach einem der Ansprüche 1 oder 2, wobei das Pulver (3) weichmagnetische Kompositwerkstoffe enthält.

4. Herstellungsverfahren einem der Ansprüche 1 bis 3, wobei das elektrisch isolierende Material (3b) organische Verbindungen enthält.

5. Herstellungsverfahren nach einem der Ansprüche 1 bis 4, wobei das Pulver (3) vor dem Magnetisieren gesintert wird.

6. Herstellungsverfahren nach einem der Ansprüche 1 bis 5, wobei das Pressen hydraulisch oder mechanisch erfolgt.

7. Herstellungsverfahren nach einem der Ansprüche 1 bis 6, wobei die Rotorhülse (2) während des Einpressens von außen durch eine der Rotorhülse (2) angepasste Verschalung (7) gestützt wird.

## Claims

1. Production method for a rotor (6) for an electric motor, comprising the following steps:
- inserting (S1) a magnetizable powder (3) into a hollow rotor sleeve (2), wherein the powder (3) contains magnetizable particles (3a) which are coated with an electrically insulating material (b);
- pressing (S2) the powder (3) into the rotor sleeve (2), wherein a magnet core (5), which is pressed against the inner walls of the rotor sleeve (2), is produced by pressing the magnetizable powder (3);
- and magnetizing (S3) the pressed-in powder (3);
- wherein the rotor sleeve (2) is heated before the pressing-in operation, and wherein, when the rotor sleeve (2) is cooled down, the radius of the rotor sleeve (2) shrinks, as a result of which the contact pressure of the magnet core (5) is increased.

2. Production method according to Claim 1, wherein the powder is pressed in by inserting a first plunger (1) into a first opening of the rotor sleeve and by inserting a second plunger (4) into a second opening of the rotor sleeve (2).

3. Production method according to either of Claims 1 and 2, wherein the powder (3) contains soft-magnetic composite materials.

4. Production method according to one of Claims 1 to 3, wherein the electrically insulating material (3b) contains organic compounds.

5. Production method according to one of Claims 1 to 4, wherein the powder (3) is sintered before the magnetization operation.

6. Production method according to one of Claims 1 to 5, wherein the pressing operation is performed hydraulically or mechanically.

7. Production method according to one of Claims 1 to 6, wherein the rotor sleeve (2) is supported from the outside by a casing (7), which is matched to the rotor sleeve (2), during the pressing-in operation.

## Revendications

1. Procédé de fabrication d'un rotor (6) pour un moteur électrique comportant les étapes suivantes :
- introduction (S1) d'une poudre pouvant être magnétisée (3) dans un manchon (2) de rotor creux, la poudre (3) contenant des particules pouvant être magnétisées (3a), qui sont revêtues par un matériau électriquement isolant (b) ;
- compression (S2) de la poudre (3) dans le manchon (2) de rotor, un noyau magnétique (5) se formant du fait de la compression de la poudre pouvant être magnétisée (3), lequel est comprimé au niveau des parois internes du manchon (2) de rotor ;
- et magnétisation (S3) de la poudre comprimée (3) ;
- le manchon (2) de rotor étant chauffé avant la compression et, lors du refroidissement du manchon (2) de rotor, le rayon du manchon (2) de rotor rétrécissant, la pression d'appui du noyau magnétique (5) étant ainsi augmentée.

2. Procédé de fabrication selon la revendication 1, la compression de la poudre étant réalisée par introduction d'un premier tampon (1) dans une première ouverture du manchon de rotor et par introduction d'un deuxième tampon (4) dans une deuxième ouverture du manchon (2) de rotor.

3. Procédé de fabrication selon l'une quelconque des revendications 1 et 2, la poudre (3) contenant des matériaux composites magnétiques doux.

4. Procédé de fabrication selon l'une quelconque des revendications 1 à 3, le matériau électriquement isolant (3b) contenant des composés organiques.

5. Procédé de fabrication selon l'une quelconque des revendications 1 à 4, la poudre (3) étant frittée avant la magnétisation.

6. Procédé de fabrication selon l'une quelconque des revendications 1 à 5, la compression étant réalisée de manière hydraulique ou mécanique.

7. Procédé de fabrication selon l'une quelconque des revendications 1 à 6, le manchon (2) de rotor étant soutenu, pendant la compression, de l'extérieur par l'intermédiaire d'un coffrage (7) adapté au manchon (2) de rotor.
